# EUROPÄISCHE PATENTSCHRIFT

(11) **EP 2 235 559 B1**
(45) Veröffentlichungstag und Bekanntmachung des Hinweises auf die Patenterteilung: **18.07.2012**
(21) Anmeldenummer: 08870795.5
(22) Anmeldetag: 18.12.2008
(51) Int. Cl.: G01S 7/35, G01S 13/48, G01S 13/93, G01S 7/03, H03C 1/54, H03D 7/14

(54) **MONOSTATISCHE MEHRSTRAHLRADARSENSORVORRICHTUNG FÜR EIN KRAFTFAHRZEUG**
MONOSTATIC MULTIBEAM RADAR SENSOR DEVICE FOR MOTOR VEHICLE
DISPOSITIF DÉTECTEUR RADAR MULTIFAISCEAU MONOSTATIQUE POUR UN VÉHICULE AUTOMOBILE

(30) Priorität: 16.01.2008 DE 102008004644
(43) Veröffentlichungstag der Anmeldung: 06.10.2010
(73) Patentinhaber: Robert Bosch GmbH, 70442 Stuttgart (DE)
(72) Erfinder: BINZER, Thomas, 70565 Stuttgart (DE); HAUK, Joachim, 71272 Renningen-Malmsheim (DE); STEINBUCH, Dirk, 71299 Wimsheim (DE)
(86) Internationale Anmeldenummer: PCT/EP2008/067901
(87) Internationale Veröffentlichungsnummer: WO 2009/089986

(56) Entgegenhaltungen:
- EP-A- 0 131 337
- WO-A-2006/029926
- DE-A1- 10 239 856
- DE-A1-102005 062 772
- US-A- 5 483 696
- US-B1- 6 275 688
- GUAN X ET AL: "Integrated Phased Array Systems in Silicon" PROCEEDINGS OF THE IEEE, IEEE. NEW YORK, US, Bd. 93, Nr. 9, 1. September 2005 (2005-09-01), Seiten 1637-1655, XP011137882 ISSN: 0018-9219

## Beschreibung

### Stand der Technik

Die Erfindung betrifft eine monostatische Mehrstrahlradarsensorvorrichtung für ein Kraftfahrzeug mit einer wenigstens einen Sende-/Empfangskanal und wenigstens einen Empfangskanal aufweisenden Richtcharakteristik einer Antenneneinrichtung und einem Mischersystem, welches für wenigstens einen der Empfangskanäle einen wenigstens annähernd isolierenden Mischer aufweist. Die Erfindung betrifft außerdem ein Verfahren zum Betrieb einer derartigen monostatischen Mehrstrahlradarsensorvorrichtung.

Derartige Radarsensoren werden beispielsweise in Abstandswarn- und Regelsystemen in Kraftfahrzeugen, insbesondere adaptive Geschwindigkeitsregelsysteme bzw. ACC(Adaptive Cruise Control)-Systeme, eingesetzt. In der Publikation der Robert Bosch GmbH "Adaptive Fahrgeschwindigkeitsregelung ACC, Gelbe Reihe, Ausgabe 2002, Technische Unterrichtung" sind derartige adaptive Geschwindigkeitsregelsysteme beschrieben. Dort sind ebenfalls Radarsensoren beschrieben.

Bei Radarsensoren mit einem monostatischen Antennenkonzept wird ein und dieselbe Antenne zum Senden des Radarsignals und für den Empfang des Radarechos eingesetzt. Die nichtisolierenden Mischer bzw. Transfermischer dienen dann dazu, das über den HF(Hochfrequenz)-Quellenport zugeführte Signal zur Antenne weiterzuleiten und zugleich das von der Antenne empfangene Signal mit einem Anteil des über den HF-Quellenport zugeführten Signals zu mischen. Das Mischprodukt stellt dann ein Zwischenfrequenzsignal, dessen Frequenz den Frequenzunterschied zwischen dem gesendeten und dem empfangenen Signal angibt, dar. Dieses Zwischenfrequenzsignal liefert Informationen über die bei der Reflektion des gesendeten Signals am Radarziel eingetretene Dopplerverschiebung und damit über die Relativgeschwindigkeit des Radarziels und, sofern die Frequenz des gesendeten Signals rampenförmig moduliert ist (FMCW(Frequency Modulated Continous Wave)-Radar), auch über die Laufzeit des Radarsignals und damit über den Abstand des Radarziels. Ein monostatischer Mehrstrahlradarsensor für Kraftfahrzeuge mit einem Mischersystem, welches mehrere Transfermischer aufweist, ist in der DE 10 2004 044 130 A 1 angegeben.

Bei bekannten Systemarchitekturen von Mehrstrahlradarsensoren mit vier Radarstrahlen bzw. Radarstrahlkeulen bzw. Radarbeams wird die erzeugte Lokaloszillatorleistung Transfermischem zugeführt. Diese Transfermischer senden typischerweise die Hälfte der Leistung aus, während die andere Hälfte der Leistung als Referenzsignal für die für den Mischvorgang nötigen Halbleiterbauelemente, beispielsweise Dioden oder Transistoren dient. Dies gilt jedoch typischerweise nur für die inneren Radarstrahlkeulen, welche Sende-/Empfangskanäle bilden. Bei den beiden äußeren Radarstrahlkeulen kann die Sendeleistung abgesenkt sein bzw. ganz entfallen, um schmälere innere Radarstrahlkeulen zu erzielen, was einerseits eine bessere Winkelschätzung ermöglicht und andererseits die Nebenspurstörungen reduziert. Da die äußeren Radarstrahlkeulen somit reine Empfangskanäle darstellen, werden ihnen isolierende Mischer zugeordnet.

Die in der DE 10 2005 062 772 A1 offenbarte Radarvorrichtung weist einen lokalen Oszillator und eine Mehrzahl monostatischer Sende- und Empfangseinrichtungen auf. Der lokale Oszillator dient zum Generieren eines Hochfrequenz-Signals und ist mit der Mehrzahl monostatischer Sende- und Empfangseinrichtungen gekoppelt. Jede monostatische Sende- und Empfangseinrichtung der Mehrzahl von monostatischen Sende- und Empfangseinrichtungen weist ein Antennenelement und eine Verzögerungsstrecke auf. Das Antennenelement dient zum Senden des Hochfrequenz-Signals und zum Empfangen von reflektierten Anteilen des Hochfrequenz-Signals. Die erste Verzögerungsstrecke zum Verzögern des Hochfrequenz-Signals um eine unveränderliche Dauer ist zwischen das Antennenelement und den lokalen Oszillator geschaltet.

In der US 5,483,696 wird ein balancierter Mischer als Schalter verwendet. In einem Digitalmodus erhält der balancierte Mischer einen analogen Digitalmodus-Schwingungsverlauf und einen Lokaloszillator. Der balancierte Mischer mischt den Schwingungsverlauf und den Lokaloszillator, um ein resultierendes Ausgangssignal bereitzustellen.

Die EP 0 131 337 A1 betrifft einen Doppelgegentaktmischer. Dabei weisen zwei kreuzgekoppelte Differenzverstärker einen gemeinsamen ersten und einen gemeinsamen zweiten Basisanschluss auf, an welche ein Oszillatorsignal angelegt wird.

Die US 6,275,688 B1 offenbart einen doppelt balancierten Mischer zur Verwendung in Kommunikationsgeräten, wie tragbaren Telefonen oder Handys.

Des Weiteren wird auf Guan X et al: "Integrated Phased Array Systems in Silicon", Proceedings of the IEEE, IEEE. New York, US, Bd. 93, Nr. 9, 1. September 2005 (2005-09-01), Seiten 1637-1655, XP011137882 ISSN: 0018-9219 verwiesen.

### Vorteile der Erfindung

Die erfindungsgemäße monostatische Mehrstrahlradarsensorvorrichtung für ein Kraftfahrzeug mit einer wenigstens einen Sende-/Empfangskanal und wenigstens einen Empfangskanal aufweisenden Richtcharakteristik einer Antenneneinrichtung und einem Mischersystem, welches für wenigstens einen der Empfangskanäle einen wenigstens annähernd isolierenden Mischer aufweist, wobei der wenigstens annähernd isolierende Mischer einen Gilbertzellenmischer aufweist, welcher, bedingt durch eine nichtideale Isolation, insbesondere seiner Mischerzelle, zwischen einem Eingang eines Lokaloszillatorsignals bzw. einer Lokaloszillatorsignaleinspeisung und dem entsprechenden Empfangskanal über diesen durch ein überkoppelndes Signal eine Sendeleistung abgibt, welche die Richtcharakteristik der Antenneneinrichtung beeinflusst, wobei die Richtcharakteristik zur Erzielung eines zusätzlichen Informationsgehalts, durch eine gesteuerte Umschaltung der Phasenlage des überkoppelnden Signals zwischen 0° und 180°, umschaltbar ist, wobei die Schalttransistorpaare (12a,12b) des Gilbertzellenmischers (9) separat durch jeweils eigene Stromquellen (14a,14b) gespeist werden, wobei zur Steuerung der Phasenlage des überkoppelnden Signals (10) die jeweils eigenen Stromquellen (14a,14b) gezielt asymmetrische Speiseströme, welche eine entsprechende Stromdifferenz zueinander aufweisen, bereitstellen, und wobei die Steuerung der Phasenlage des überkoppelnden Signals (10) mittels einer gezielten Steuerung der durch die jeweils eigenen Stromquellen (14a,14b) der Schalttransistorpaare (12a,12b) bereitgestellten Speiseströme erfolgt, hat den Vorteil, dass eine schaltbare Richtcharakteristik bzw. ein schaltbares Summensendediagramm geschaffen wird. Somit kann die Mehrstrahlradarsensorvorrichtung mit insbesondere zwei unterschiedlichen Zuständen, welche durch Summensendediagramme verschiedener Breite gekennzeichnet sind, betrieben werden. Durch diese Umschaltung ist ein zusätzlicher Informationsgehalt realisierbar, der die Performance der beteiligten Systeme wesentlich verbessern kann. Die Umschaltung ermöglicht es, Objekte in unterschiedlichen Winkelablagen auszublenden bzw. zu bestätigen. Insbesondere erscheint diese Methode wirksam im Winkelbereich zwischen 4° und 8°, da dort signifikante Amplitudenunterschiede in der Ausleuchtung durch das Summensendediagramm erwartet werden können. Damit kann potenziell der Winkelschätzbereich erweitert werden.

Durch den Einsatz eines Gilbertzellenmischers bzw. einer Gilbertzelle als Mischerzelle in dem isolierenden Mischer, kann das Summensendediagramm entsprechend geformt werden. Gilbertzellenarchitekturen sind beispielsweise aus der DE 102 39 856 A1 bekannt und werden vorzugsweise dazu eingesetzt, Mischer auf Transistorbasis (anstatt auf Diodenbasis) zu realisieren und somit einen zusätzlichen Konversionsgewinn zu realisieren.

Die Besonderheit eines derartigen Gilbertzellenmischers besteht unter anderem darin, dass bei ideal identischen Schalttransistorpaaren theoretisch eine unendlich hohe Isolation zwischen Lokaloszillatorsignaleinspeisung und Empfangskanal erreicht werden kann. In der Mehrstrahlradarsensorvorrichtung würde dies bedeuten, dass von den Empfangskanälen, insbesondere den äußeren Radarstrahlkeulen, keine eingespeiste Lokaloszillatorleistung abstrahlen könnte. In der Praxis bei realer Implementierung, insbesondere bei Frequenzen im Bereich von 77 Gigahertz, kann jedoch nur ein endlich guter Gleichlauf aller Transistoren erzielt werden. Geringe Schwankungen in der Stromverstärkung bedingen einen signifikanten Rückgang der Isolation. Im System äußert sich dies darin, dass - hinsichtlich der Amplitude - die äußeren Radarstrahlkeulen trotzdem mit abgesenkter Leistung abstrahlen. Damit tragen sie zum Richtdiagramm der Mehrstrahlradarsensorvorrichtung bei. Bedingt durch die nichtideale Isolation der Mischerzelle zwischen dem Eingang des Lokaloszillatorsignals und dem entsprechenden Empfangskanal, wird durch das überkoppelnde Signal bzw. Lecksignal eine Sendeleistung abgegeben. Dementsprechend muss auch die Phasenlage aller vier Radarbeams identisch sein, um ein verwertbares Summensendediagramm zu erhalten. In der Realität war es tatsächlich so, dass eine relative Absenkung der äußeren zu den inneren Radarbeams nur um etwa 10 dB erreicht werden konnte. Hinsichtlich der Phase ergab sich nun ein großes Problem. Die Schalttransistorpaare besitzen die Eigenschaft, dass sich eine Asymmetrie bei der Phase des Lecksignals zwischen Lokaloszillator und Empfangskanal in einer Phasenlage von entweder 0° oder 180° äußert. Je nach dem, welcher differenzielle Zweig der Schaltung weniger Verstärkung erzeugt, kippt die Phase des Lecksignals in die eine oder andere, um jeweils 180° verschobene Phasenlage. Somit konnte das Richtdiagramm beliebig zufällig ausfallen, wobei im Mittel mit einem Ausschuss von ca. 50% gerechnet werden musste, da dieses Kippen bisher nicht kontrollierbar war. Die erfindungsgemäße Mehrstrahlradarsensorvorrichtung ermöglicht nun in vorteilhafter Weise durch eine kontrollierte Steuerung der Phasenlage des überkoppelnden Signals eine umschaltbare Richtcharakteristik. Dabei ist die Phasenlage des überkoppelnden Signals zwischen 0° und 180° umschaltbar.

Der Nichtkontrollierbarkeit des Kippens der Phasenlage des überkoppelnden Signals kann wie folgt entgegengewirkt werden. Anstatt die herstellungstechnischen Unterschiede in der Stromverstärkung der Transistoren in Kauf zu nehmen, kann dieser Parameter gezielt beeinflusst werden. Bisher wurden beide differenziellen Schalttransistorpaare mittels einer gemeinsamen Stromquelle gespeist. Teilt man nun die Stromquelle in zwei Stromquellen für die individuellen Schalttransistorpaare auf, so hat man Einfluss auf die Stromverstärkung der jeweiligen Schalttransistorpaare, welche durch den eingeprägten Strom mitbestimmt wird. Durch eine entsprechende Mimik und einen äußeren Steuerpin ist es in vorteilhafter Weise möglich, den Strom in den beiden Zweigen gezielt zu asymmetrisieren. Damit kann kontrolliert ein Kippen der Phase nach 0° bzw. 180° erreicht werden. Es ist lediglich sicherzustellen, dass die Stromdifferenz in den Zweigen groß genug ist, um Fertigungsschwankungen auszublenden.

Anspruch 2 betrifft ein Verfahren zum Betrieb einer monostatischen Mehrstrahlradarsensorvorrichtung für ein Kraftfahrzeug.

Nachfolgend ist anhand der Zeichnung prinzipmäßig ein Ausführungsbeispiel der Erfindung beschrieben.

### Kurzbeschreibung der Zeichnung

Es zeigen:
- Figur 1: eine Prinzipdarstellung einer erfindungsgemäßen Mehrstrahlradarsensorvorrichtung;
- Figur 2: ein vereinfachtes Blockschaltbild einer Empfängerarchitektur der erfindungsgemäßen Mehrstrahlradarsensorvorrichtung;
- Figur 3: ein prinzipmäßiges Schaltbild eines modifizierten Gilbertzellenmischers für die erfindungsgemäße Mehrstrahlradarsensorvorrichtung;
- Figur 4: ein vereinfachtes horizontales Richtdiagramm der erfindungsgemäßen Mehrstrahlradarsensorvorrichtung in einem ersten Zustand; und
- Figur 5: ein vereinfachtes horizontales Richtdiagramm der erfindungsgemäßen Mehrstrahlradarsensorvorrichtung in einem zweiten Zustand.

### Beschreibung von Ausführungsbeispielen

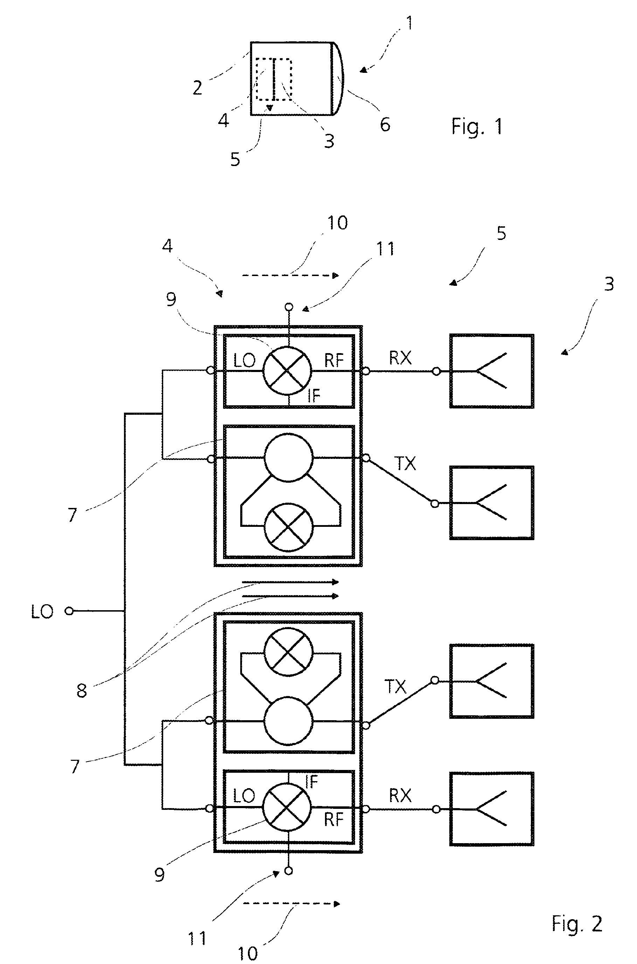

Figur 1 zeigt eine erfindungsgemäße monostatische Mehrstrahlradarsensorvorrichtung 1 für ein nicht dargestelltes Kraftfahrzeug mit einem Gehäuse 2. Das Gehäuse 2 weist eine Antenneneinrichtung 3 und ein Mischersystem 4 auf, welche eine Empfängerarchitektur 5 der erfindungsgemäßen Mehrstrahlradarsensorvorrichtung 1 mit Sende-/Empfangskanälen TX und Empfangskanälen RX bilden (siehe Figur 2). Des weiteren ist ein als Linse 6 ausgebildetes Strahlformungselement vorgesehen.

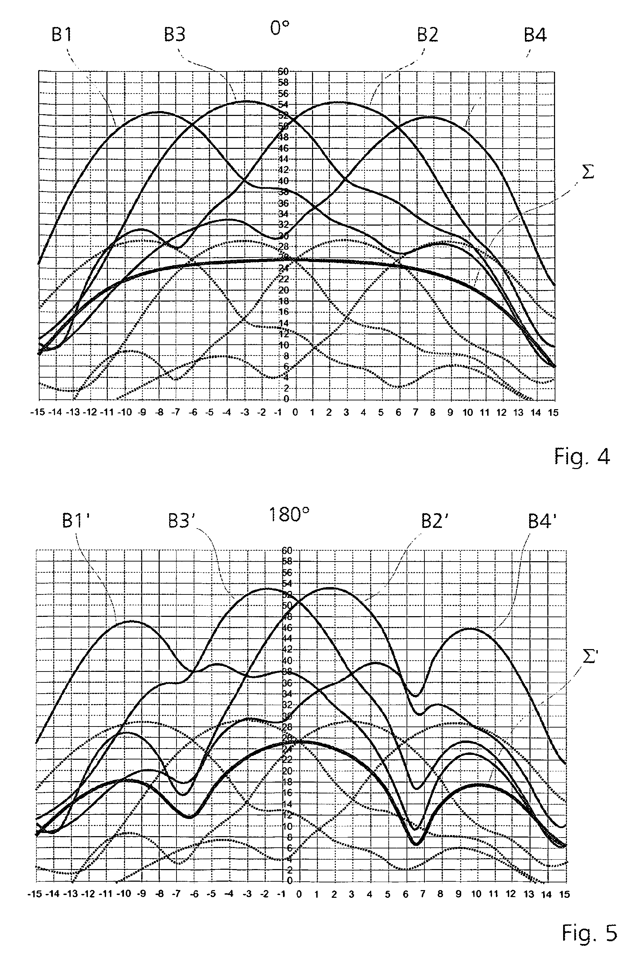

Die Sende-/Empfangskanäle TX und die Empfangskanäle RX der Mehrstrahlradarsensorvorrichtung 1 ergeben eine Richtcharakteristik der Mehrstrahlradarsensorvorrichtung 1 mit Radarbeams bzw. Radarstrahlkeulen B1, B1' - B4, B4', welche sich zu entsprechenden Summensendediagrammen Σ, Σ' addieren (siehe Figuren 4 und 5).

In Figur 2 ist die Empfängerarchitektur 5 mit der Antenneneinrichtung 3 und dem Mischersystem 4 näher dargestellt. Über einen Eingang bzw. eine Lokaloszillatoreinspeisung wird ein Lokaloszillatorsignal LO eingespeist. Den zwei Sende-/Empfangskanälen TX sind Transfermischer- bzw. Transferkopplereinheiten 7 des Mischersystems 4 zugeordnet. Somit wird eine gezielt eingestellte Transmission bzw. Sendeleistung (in Figur 2 durch Pfeile 8 angedeutet) über die Sende-/Empfangskanäle TX mit den mittleren bzw. inneren Radarstrahlkeulen B2, B2', B3, B3' abgegeben. Die Transfermischer- bzw. Transferkopplereinheiten 7 sind hinlänglich bekannt, weshalb auf diese nachfolgend nicht näher eingegangen wird.

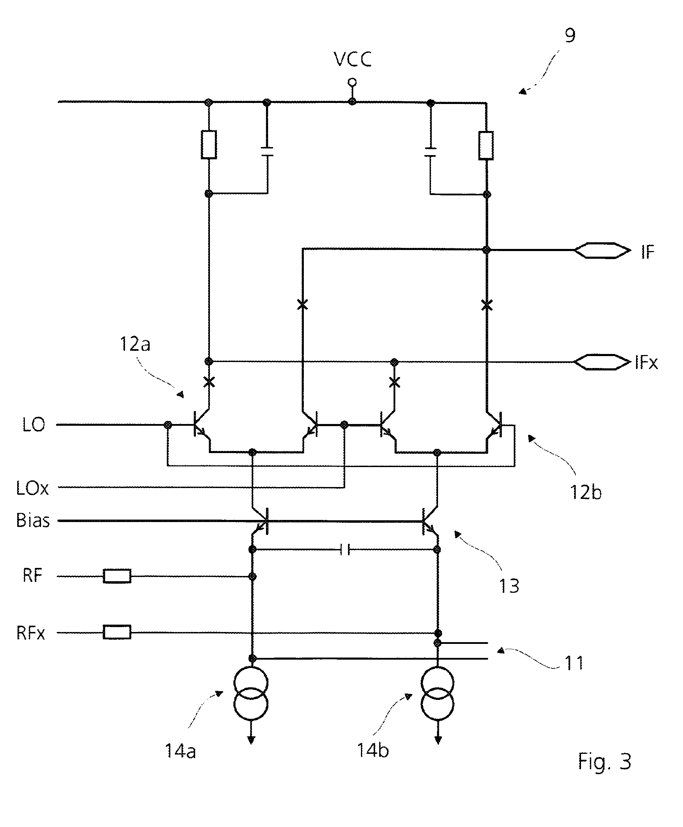

Wie weiter aus Figur 2 ersichtlich, ist das Mischersystem 4 für die beiden Empfangskanäle RX, welche die äußeren Radarstrahlkeulen B1, B1', B4, B4' erzeugen, jeweils mit einem wenigstens annähernd isolierenden Mischer, welcher einen Gilbertzellenmischer 9 mit einer in Figur 3 näher dargestellten Mischerzelle aufweist, versehen. Bedingt durch eine nichtideale Isolation, insbesondere seiner Mischerzelle, zwischen dem Eingang des Lokaloszillatorsignals LO und dem entsprechenden Empfangskanal RX, gibt der Gilbertzellenmischer 9 über den Empfangskanal RX durch ein überkoppelndes Signal mit ca. -20 dB Transmission (durch Pfeile 10 angedeutet) eine Sendeleistung bzw. Resttransmission ab, welche die Richtcharakteristik bzw. das Richtdiagramm der Antenneneinrichtung 3 maßgeblich beeinflusst (äußere Radarstrahlkeulen B1, B1', B4, B4'). Durch den fehlenden Verlust der Transfermischer- bzw. Transferkopplereinheiten 7 ergibt sich zusätzlich eine um ca. 5 dB bessere Konversion der äußeren Empfangskanäle RX. Der Gilbertzellenmischer 9 erhält als Eingangssignal das Lokaloszillatorsignal LO. Antennenseitig wird ein Hoch- bzw. Radiofrequenzsignal RF zugeführt. Des weiteren kann ein Zwischenfrequenzsignal IF abgegriffen werden.

Bei der erfindungsgemäßen Mehrstrahlradarsensorvorrichtung 1 ist die Richtcharakteristik durch eine Steuerung der Phasenlage des überkoppelnden Signals 10 des Gilbertzellenmischers 9 umschaltbar, wobei dazu die Phasenlage des überkoppelnden Signals 10 zwischen 0° und 180° umschaltbar ist. Die Umschaltung bzw. deren Steuerung erfolgt über Steuerungseingänge bzw. Umschaltports 11.

In Figur 3 ist ein Schaltbild eines modifizierten Gilbertzellenmischers 9 für die erfindungsgemäße Mehrstrahlradarsensorvorrichtung 1 dargestellt. Das Lokaloszillatorsignal LO bzw. LOx wird differenziell oberen Schalttransistorpaaren 12a, 12b zugeführt. Das Hoch- bzw. Radiofrequenzsignal RF, RFx wird differenziell dem unterem Transistorpaar 13 zugeführt. Das Zwischenfrequenzsignal IF, IFx kann differenziell an den oberen Widerständen abgegriffen werden. Des weiteren ist eine Spannungsversorgung VCC und ein Bias vorgesehen. Die Schalttransistorpaare 12a, 12b des Gilbertzellenmischers 9 werden separat durch jeweils eigene Stromquellen 14a, 14b gespeist. Zur Steuerung der Phasenlage des überkoppelnden Signals 10 stellen die jeweils eigenen Stromquellen 14a, 14b gezielt asymmetrische Speiseströme bereit, welche eine entsprechende Stromdifferenz zueinander aufweisen. Dies wird über den Umschaltport 11 gesteuert. Damit kann kontrolliert ein Kippen der Phase nach 0° bzw. 180° erreicht werden. Es ist lediglich sicherzustellen, dass die Stromdifferenz in den Zweigen groß genug ist, um Fertigungsschwankungen zu maskieren.

Der Gilbertzellenmischer 9 kann insbesondere als doppelt balancierter MMIC(Monolithic Microwave Integrated Circuit)-Mischer ausgebildet sein. Das Summensendediagramm Σ, Σ' wird durch den Einsatz des modifizierten Gilbertzellenmischers 9 entsprechend geformt und umschaltbar gestaltet. Die relative Transmission des Gilbertzellenmischers 9 ist in der Phase zwischen 0° und 180° schaltbar. Sehr vorteilhaft ist dabei die annähernd verlustlose Implementierung dieser Funktionalität, wobei keine Eingriffe in die vorhandene Mischerarchitektur vorgenommen werden.

Sonach kann ein Verfahren zum Betrieb der monostatischen Mehrstrahlradarsensorvorrichtung 1 für ein Kraftfahrzeug durchgeführt werden, wobei die Richtcharakteristik, insbesondere das Summensendediagramm Σ, Σ' der Mehrstrahlradarsensorvorrichtung 1 zur Erzielung eines zusätzlichen Informationsgehalts zwischen zwei Zuständen umgeschaltet wird. Die Umschaltung der Zustände erfolgt durch eine gesteuerte Umschaltung der Phasenlage des überkoppelnden Signals 10 zwischen 0° und 180° mittels der gezielten Steuerung der durch die jeweils eigenen Stromquellen 14a, 14b der Schalttransistorpaare 12a, 12b bereitgestellten Speiseströme.

Wie aus den Figuren 4 und 5 ersichtlich, ermöglicht diese Funktionalität dementsprechend das Umschalten der Phase der äußeren Radarstrahlkeulen B1, B1', B4, B4' zwischen 0° und 180°. In dem in Figur 4 dargestellten 0°-Fall, wenn zudem sichergestellt ist, dass an der Antenneneinrichtung 3 an allen Sende-/Empfangskanälen TX bzw. Radarstrahlkeulen B2, B3 und Empfangskanälen RX bzw. Radarstrahlkeulen B1, B4 Phasengleichheit herrscht, wird ein Summensendediagramm Σ mit einem typischem Hauptstrahl von ±8,5° Breite (3 dB) erzeugt. Die Sende- und Empfangsbeams bzw. Radarstrahlkeulen B1 - B4 überlagern sich jeweils phasengleich.

Die Kurven B1, B1' - B4, B4' stellen Zweiwegebeams dar. Die entsprechenden Einwegebeams sind gepunktet angedeutet.

In dem in Figur 5 dargestellten 180°-Fall ergibt sich an den äußeren Flanken der mittleren Radarstrahlkeulen B2', B3' eine destruktive Überlagerung durch die äußeren Radarstrahlkeulen B1', B4', welche sich um 180° phasenverschoben addieren. Dadurch resultiert eine deutliche Verschmälerung des Hauptstrahls im Summensendediagramm Σ' von ±3°. Durch die 180°-Phasenlage werden weiterhin in den äußeren Bereichen des Erfassungsfeldes zusätzliche Nebenkeulen erzeugt.

Die Umschaltung ermöglicht es, Objekte in unterschiedlichen Winkelablagen auszublenden bzw. zu bestätigen. Insbesondere ist diese Methode wirksam im Winkelbereich zwischen 4° und 8°, da dort signifikante Amplitudenunterschiede in der Ausleuchtung durch das Summensendediagramm Σ, Σ' erwartet werden können. Damit kann potenziell der Winkelschätzbereich erweitert werden.

## Patentansprüche

1. Monostatische Mehrstrahlradarsensorvorrichtung (1) für ein Kraftfahrzeug mit einer wenigstens einen Sende-/Empfangskanal (TX) und wenigstens einen Empfangskanal (RX) aufweisenden Richtcharakteristik einer Antenneneinrichtung (3) und einem Mischersystem (4), welches für wenigstens einen der Empfangskanäle (RX) einen wenigstens annähernd isolierenden Mischer aufweist, **dadurch gekennzeichnet, dass** der wenigstens annähernd isolierende Mischer einen Gilbertzellenmischer (9) aufweist, welcher, bedingt durch eine nichtideale Isolation zwischen einem Eingang eines Lokaloszillatorsignals (LO) und dem entsprechenden Empfangskanal (RX) über diesen durch ein überkoppelndes Signal (10) eine Sendeleistung abgibt, welche die Richtcharakteristik der Antenneneinrichtung (3) beeinflusst, wobei die Richtcharakteristik zur Erzielung eines zusätzlichen Informationsgehalts, durch eine gesteuerte Umschaltung der Phasenlage des überkoppelnden Signals (10) zwischen 0° und 180°, umschaltbar ist, wobei die Schalttransistorpaare (12a,12b) des Gilbertzellenmischers (9) separat durch jeweils eigene Stromquellen (14a,14b) gespeist werden, wobei zur Steuerung der Phasenlage des überkoppelnden Signals (10) die jeweils eigenen Stromquellen (14a,14b) gezielt asymmetrische Speiseströme, welche eine entsprechende Stromdifferenz zueinander aufweisen, bereitstellen, und wobei die Steuerung der Phasenlage des überkoppelnden Signals (10) mittels einer gezielten Steuerung der durch die jeweils eigenen Stromquellen (14a,14b) der Schalttransistorpaare (12a,12b) bereitgestellten Speiseströme erfolgt.

2. Verfahren zum Betrieb einer monostatischen Mehrstrahlradarsensorvorrichtung (1) für ein Kraftfahrzeug gemäß Anspruch 1, **dadurch gekennzeichnet, dass** eine Richtcharakteristik, insbesondere ein Summensendediagramm (Σ,Σ') der Mehrstrahlradarsensorvorrichtung (1) zur Erzielung eines zusätzlichen Informationsgehalts zwischen zwei Zuständen umgeschaltet wird.

3. Verfahren nach Anspruch 2, **dadurch gekennzeichnet, dass** die Umschaltung der Zustände durch eine gesteuerte Umschaltung der Phasenlage des überkoppelnden Signals (10) zwischen 0° und 180° mittels einer gezielten Steuerung der durch die jeweils eigenen Stromquellen (14a,14b) der Schalttransistorpaare (12a,12b) bereitgestellten Speiseströme erfolgt.

## Claims

1. Monostatic multibeam radar sensor device (1) for a motor vehicle, having a directional characteristic of an antenna device (3), which characteristic has at least one transceiving channel (TX) and at least one receiving channel (RX), and a mixer system (4) which has an at least approximately isolating mixer for at least one of the receiving channels (RX), **characterized in that** the at least approximately isolating mixer has a Gilbert cell mixer (9) which, due to non-ideal isolation between an input of a local oscillator signal (LO) and the corresponding receiving channel (RX), emits a transmission power via this channel by means of an overcoupling signal (10), which transmission power influences the directional characteristic of the antenna device (3), the directional characteristic being able to be changed over by means of a controlled changeover of the phase angle of the overcoupling signal (10) between 0° and 180° in order to achieve additional information content, the switching transistor pairs (12a, 12b) of the Gilbert cell mixer (9) being separately supplied by respective separate current sources (14a, 14b), the respective separate current sources (14a, 14b) providing deliberately asymmetrical supply currents having a corresponding current difference with respect to one another in order to control the phase angle of the overcoupling signal (10), and the phase angle of the overcoupling signal (10) being controlled by deliberately controlling the supply currents provided by the respective separate current sources (14a, 14b) of the switching transistor pairs (12a, 12b).

2. Method for operating a monostatic multibeam radar sensor device (1) for a motor vehicle according to Claim 1, **characterized in that** a directional characteristic, in particular a transmission sum diagram (Σ, Σ'), of the multibeam radar sensor device (1) is changed over between two states in order to achieve additional information content.

3. Method according to Claim 2, **characterized in that** the states are changed over by means of a controlled changeover of the phase angle of the overcoupling signal (10) between 0° and 180° by deliberately controlling the supply currents provided by the respective separate current sources (14a, 14b) of the switching transistor pairs (12a, 12b).

## Revendications

1. Dispositif de détection radar monostatique à faisceaux multiples (1) pour un véhicule automobile, ayant une caractéristique directionnelle d'un arrangement d'antenne (3) qui présente au moins un canal d'émission/réception (TX) et au moins un canal de réception (RX) et comprenant un système mélangeur (4) qui présente un mélangeur au moins approximativement isolant pour au moins l'un des canaux de réception (RX), **caractérisé en ce que** le mélangeur au moins approximativement isolant présente un mélangeur à cellule de Gilbert (9) qui, du fait d'une isolation non idéale entre l'entrée d'un signal d'un oscillateur local (LO) et le canal de réception (RX) correspondant, délivre sur celui-ci par le biais d'un signal de surcouplage (10) une puissance d'émission qui influence la caractéristique directionnelle de l'arrangement d'antenne (3), la caractéristique directionnelle pouvant être inversée entre 0° et 180° par une inversion commandée de la position de phase du signal de surcouplage (10) en vue d'obtenir un contenu d'information supplémentaire, les paires de transistors de commutation (12a, 12b) du mélangeur à cellule de Gilbert (9) étant alimentées séparément par des sources de courant (14a, 14b) respectivement propres, les sources de courant (14a, 14b) respectivement propres, pour la commande de la position de phase du signal de surcouplage (10), délivrant de manière ciblée des courants d'alimentation asymétriques qui présentent l'un par rapport à l'autre une différence de courant en conséquence, et la commande de la position de phase du signal de surcouplage (10) s'effectuant au moyen d'une commande ciblée des courants d'alimentation délivrés par les sources de courant (14a, 14b) respectivement propres des paires de transistors de commutation (12a, 12b).

2. Procédé d'exploitation d'un dispositif de détection radar monostatique à faisceaux multiples (1) pour un véhicule automobile selon la revendication 1, **caractérisé en ce qu'**une caractéristique directionnelle, notamment un diagramme d'émission totale (Σ, Σ') du dispositif de détection radar à faisceaux multiples (1), est inversée entre deux états en vue d'obtenir un contenu d'information supplémentaire.

3. Procédé selon la revendication 2, **caractérisé en ce que** l'inversion des états s'effectue par une inversion commandée de la position de phase du signal de surcouplage (10) entre 0° et 180° au moyen d'une commande ciblée des courants d'alimentation délivrés par les sources de courant (14a, 14b) respectivement propres des paires de transistors de commutation (12a, 12b).
